# EUROPEAN PATENT APPLICATION

(11) **EP 4 056 312 A1**
(43) Date of publication of application: **14.09.2022**
(21) Application number: 20885665.8
(22) Date of filing: 09.11.2020
(51) Int. Cl.: B23K 35/368, B23K 9/16

(54) **FLUXED CORE WIRE AND METHOD FOR MANUFACTURING WELD JOINT**

(30) Priority: 08.11.2019 JP 2019202931
(71) Applicant: NIPPON STEEL CORPORATION, Chiyoda-ku Tokyo 100-8071 (JP)
(72) Inventor: WATANABE, Kotaro, Tokyo 100-8071 (JP)
(74) Representative: Vossius & Partner Patentanwälte Rechtsanwälte mbB
(86) International application number: PCT/JP2020/041777
(87) International publication number: WO 2021/090953

(57) **Abstract**

A flux-cored wire of the present disclosure has a steel sheath and a flux filled at an inside of the steel sheath, has a total amount of moisture by ratio with respect to a total wire mass of 300 ppm or less, has flux containing fluorides, and has an amount of the fluorides by ratio with respect to the total wire mass of, by total of values converted to F, 0.11 mass% or more and 2.50 mass% or less. If using the flux-cored wire of the present disclosure for welding, a stable weld shape can be obtained and, further, the amount of diffusible hydrogen of the weld metal can be reduced. For this reason, the flux-cored wire of the present disclosure can be suitably used for welding high strength steel such as ferrite steel.

## Description

### FIELD

The present application relates to a flux-cored wire and a method for producing a welded joint, more particularly relates to a flux-cored wire able to stabilize a bead shape in gas shielded arc welding and, while not particularly limited to this, able to be suitably used for welding high strength steel having a tensile strength of 780 MPa or more and a method for producing a welded joint using the same.

### BACKGROUND

Gas shielded arc welding is the most popular welding method. In particular, it enables high efficiency production of welded joints, so is being widely used for welding steel materials. Further, the welding materials (weld materials) used for gas shielded arc welding may be roughly classified as solid wires and flux-cored wires, but flux-cored wires are mainly being used since they are excellent in welding work efficiency and exhibit higher performance.

Here, the role of the shield gas used in gas shielded arc welding is to form a flow of gas not causing a reaction with the molten metal during welding around the arc and cutting off contact between the molten metal and air. That is, it is necessary to protect the molten metal from intrusion of hydrogen due to the moisture in the air. Further, if nitrogen or oxygen dissolves in the molten steel due to a reaction with the air, it will end up causing porosity and other weld defects, so as the shield gas, in general argon (Ar) or helium (He) or another inert gas is used. Considering weldability and cost, further, mixtures with carbon dioxide (CO₂, carbonic acid gas) and oxygen (O₂) are used.

In this regard, however, in gas shielded arc welding, sometimes the bead width does not become wider and the bead shape ends up as a sharply projecting one. If such sharp projection of the bead shape is formed, the allowable range of deviation from the wire target position (deviation from targeted position of weld line) becomes smaller and weld defects end up occurring more easily. To prevent this, it may be considered to lower the welding voltage to make the bead shape wider, but in this case, the amount of the melt penetration would become smaller and an irregular bead such as a humping bead is liable to end up being formed.

Therefore, for example, the method of raising the sulfur (S) concentration of the wire so as to increase the concentration of S in the molten metal and lower the surface tension of the molten metal and of limiting the pulse peak current and pulse peak period in pulse welding to predetermined ranges to sustain stable movement of weld drops so as to obtain a broad and flat bead shape has been proposed (see PTL 1).

However, even if trying to produce a welded joint by such a method, not only is the pulse power supply expensive, but also control of the pulse waveform is difficult in practice. Further, if the amount of S increases, depending on the other constituents of the steel material or wire, the weld metal is liable to be made brittle.

On the other hand, in the method of welding using an arc welding torch provided with an electrode, it has been proposed to supply a central flow of gas for contacting the electrode and an annular flow of gas surrounding the same and use as the central gas flow a mixed gas of argon and hydrogen containing 2 to 8 vol% of hydrogen (H₂) (see PTL 2). In this method, since hydrogen is a two-atom molecule, heat is supplied by the energy released during recoupling. Further, hydrogen is high in heat conductivity, so the arc energy is raised and the high movement speed (welding speed) in automatic TIG welding can be achieved. That is, due to the above such combination of gases, the welding speed is raised due to the surface activation effect accompanying the increase of volume of the molten metal and rise in temperature of the welding pool and defects such as those relating to humping can be eliminated.

However, in general, hydrogen causes low temperature fracture (low temperature cracking) in ferrite steel, so this method is limited to welding nonhardening type steel or austenitic stainless steel. Further, it is considered that the content of hydrogen in the mixed gas has to be strictly controlled (see paragraph 0047 of PTL 2).

Regarding this low temperature cracking, the relationship between: a parameter (Pc) showing weld cracking sensitivity of high tensile strength steel relative to the chemical constituents of the steel material, the sheet thickness of the steel material, and the amount of diffusible hydrogen of the fusion bonding metal; and the preheating temperature is known (for example, see NPL 1). Along with the increase in the value of this Pc, the preheating temperature for preventing low temperature cracking has to be raised. In this regard however, preheating work invites an increase in the welding work cost and an increase in the work load, so it is ideal to perform the preheating work at as low a temperature as possible or enable reduction or elimination of the preheating work. For this reason, although it is possible to prevent low temperature cracking by preheating work, the addition of hydrogen to the shield gas in the welding of the steel is liable to invite weld defects. In particular, this has been considered forbidden up until now in high strength steel with high alloy constituents and steel materials with large sheet thicknesses.

### [CITATIONS LIST]

### [PATENT LITERATURE]

PTL 1: Japanese Patent No. 4755576
PTL 2: Japanese Patent No. 5797560

### [NONPATENT LITERATURE]

NPL 1: Japan Welding Society (ed.) (2005) New Edition Welding and Joining Technology Special Discussion, Sanpo Publications Incorporated (page 146, FIG. 2.29)

### SUMMARY

### [TECHNICAL PROBLEM]

In view of the above background art, the present application discloses a method for producing a welded joint able to give a stable weld shape, able to reduce the amount of diffusible hydrogen of the weld metal, and, for example, able to be applied to even high strength steel such as ferrite steel which easily becomes embrittled by hydrogen.

Further, the present application discloses flux-cored wire enabling a stable weld shape to be obtained, able to reduce the amount of diffusible hydrogen of the weld metal, and for example able to be suitably used for welding high strength steel such as ferrite steel.

### [SOLUTION TO PROBLEM]

The present application discloses the following flux-cored wire and method for producing a welded joint for solving the above problem.
(1) A flux-cored wire having a steel sheath and a flux filled at an inside of the steel sheath, in which flux-cored wire,
   a total amount of moisture by ratio with respect to a total wire mass is 300 ppm or less,
   the flux contains fluorides,
   an amount of the fluorides by ratio with respect to the total wire mass is, by total of values converted to F, 0.11 mass% or more and 2.50 mass% or less.
(2) The flux-cored wire of the present disclosure may have a ratio of increase of wire mass after an elapse of 72 hours in a moisture absorption test in a temperature 30°C-humidity 80% atmosphere of 100 ppm or less.
(3) The flux-cored wire of the present disclosure may have the total amount of moisture by ratio with respect to the total wire mass of 100 ppm or less.
(4) The flux-cored wire of the present disclosure may have an amount of diffusible hydrogen per mass of fusion bonding metal of 5.0 ml/100 g or less when performing a test based on JIS Z 3118: 2007 using a shield gas containing H₂ in a volume fraction of 1% and having a balance of CO₂ and impurities.
(5) The flux-cored wire of the present disclosure may have an amount of diffusible hydrogen per mass of fusion bonding metal of 12.0 ml/100 g or less when performing a test based on JIS Z 3118: 2007 using a shield gas containing H₂ in a volume fraction of 3% and having a balance of CO₂ and impurities.
(6) The flux-cored wire of the present disclosure may have a steel sheath having a seamless shape.
(7) The flux-cored wire of the present disclosure may be used for gas shielded arc welding using H₂ -containing gas as a shield gas.
(8) A method for producing a welded joint, the method comprising using the flux-cored wire of the present disclosure for gas shielded arc welding of steel materials with a tensile strength of 780 MPa or more.
(9) The method of production of the present disclosure may comprise using a shield gas containing, by volume fraction, 0.05% or more and 5% or less of H₂ and having a balance of CO₂ and impurities for performing the gas shielded arc welding.

### [ADVANTAGEOUS EFFECTS OF INVENTION]

According to the method for producing a welded joint of the present disclosure, it is possible to improve the weld shape and eliminate the problem of the projecting shape of the bead and further possible to reduce the amount of diffusible hydrogen of the weld metal, so even if welding high strength steel which is easily made brittle by hydrogen, it is possible to prevent low temperature cracking without imposing an exorbitant load on the preheating work.

Further, according to the flux-cored wire of the present disclosure, a stable weld shape is obtained and, further, the amount of diffusible hydrogen of the weld metal can be reduced, so for example it is possible to suitably use this for welding high strength steel such as ferrite steel.

### BRIEF DESCRIPTION OF DRAWINGS

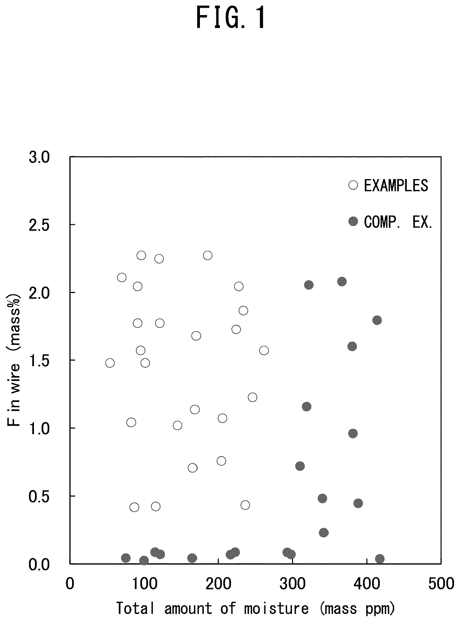

FIG. 1 is a graph showing the relationship of the total amount of moisture by ratio with respect to the total wire mass and the total of values converted to F with respect to the total wire mass in the flux-cored wire used in the examples.

### DESCRIPTION OF EMBODIMENTS

### 1. Flux-Cored Wire

The flux-cored wire of the present disclosure has a steel sheath and a flux filled at the inside of that steel sheath and is characterized by having at least the properties of the following (i) and (ii).
(i) A total amount of moisture by ratio with respect to the total wire mass being 300 ppm or less
(ii) The flux containing fluorides and the amount of those fluorides by ratio with respect to the total wire mass being, by total of values converted to F, 0.11 mass% or more and 2.50 mass% or less.

Further, the flux-cored wire of the present disclosure may have the property of the following (iii) in addition to the properties of the above (i) and (ii):
(iii) a ratio of increase of wire mass after an elapse of 72 hours in a moisture absorption test in a temperature 30°C-humidity 80% atmosphere being 100 ppm or less.

### 1.1. Total Moisture Content

Regarding (i), the amount of moisture of the flux-cored wire affects the amount of diffusible hydrogen of the fusion bonding metal moving from the flux-cored wire to the weld zone during welding. By the total amount of moisture by ratio with respect to the total wire mass being 300 ppm or less, low temperature cracking is easily suppressed. The total amount of moisture by ratio with respect to the total wire mass may be 200 ppm or less, 150 ppm or less, 100 ppm or less, 95 ppm or less, 90 ppm or less, 85 ppm or less, 80 ppm or less, 75 ppm or less, or 70 ppm or less. Note that, the smaller the total amount of moisture with respect to the total wire mass, the better, but lowering the amount of moisture is costly. From the viewpoint of keeping down costs, the total amount of moisture may for example be 10 ppm or more.

According to a new finding of the present inventor, to reduce the total amount of moisture of the flux-cored wire, it is effective to adjust the annealing conditions of the flux-cored wire, the storage conditions of the flux-cored wire, the conditions of pretreatment right before wire manufacture, etc. In particular, by heat treating the flux-cored wire in temperature of 600°C or more for 30 minutes or more, the total amount of moisture of the flux-cored wire can be reduced down to 100 ppm or less. The upper limit of the heat treatment temperature may be for example 730°C or less. Note that, even when the flux-cored wire of the present disclosure is seamless wire, if heat treating that seamless wire at a predetermined temperature, the amount of moisture at the inside of the steel sheath reacts with the inside wall surface of the steel sheath etc. to become hydrogen and that hydrogen can pass through the steel sheath and be released to the outside of the wire. That is, even when the flux-cored wire is seamless wire, by adjusting the annealing treatment etc., it is possible to make the wire suitably soften and make the initial amount of moisture remarkably fall.

Further, in the past, from the viewpoint of productivity, the above-such adjustments of the annealing treatment etc. were not made, therefore the total amount of moisture of the flux-cored wire tended to become large.

### 1.2. Fluorides

Regarding (ii), the fluorides contained in the flux are high in vapor pressure at a high temperature and change to a gas during welding, so the hydrogen partial pressure in the welding atmosphere can be lowered. On the other hand, if the content of the fluorides is too excessive, instability of the arc is invited at the time of welding or the amount of moisture of the welding material is liable to increase due to the moisture deposited on the fluorides. In flux-cored wire, the above problem can be avoided by the amount of the fluorides by ratio with respect to the total wire mass being, by total of values converted to F, 0.11 mass% or more and 2.5 mass% or less. The amount of fluorides by ratio with respect to the total wire mass may be, by total of values converted to F, 0.21 mass% or more or may be 2.3 mass% or less.

These fluorides are not particularly limited, but fluorides containing as a constituent element at least one element selected from Ca, Mg, Ba, Li, Na, and K may be used. For example, they may be one type or more of fluorides selected from the group consisting of CaF₂, MgF₂, LiF, NaF, K₂ ZrF₆, BaF₂, K₂ SiF₆, and Na₃ AlF₆. These fluorides may be used alone or, as explained later, may be used in the form of molten flux obtained by melting and solidifying a mixture of a plurality of types of fluorides. The Ca, Mg, Li, Na, K, Zr, Ba, Si, and Al formed by ionization of these fluorides act as deoxidizing elements bonding with oxygen to reduce the amount of oxygen in the weld metal, so are advantageous in the point of improving the toughness of the weld metal. Note that, the lower limit values of the contents of these types of fluorides are not particularly limited so long as the total of values converted to F becomes 0.11 mass% or more. Further, the values converted to F with respect to the total mass of the flux-cored wire are the amounts of fluorine (F) contained in the fluorides shown by the mass% with respect to the total mass of the flux-cored wire, so for example in the case of fluorides such as explained above, the values converted to F can be found by the following formula (1).

0.487×CaF₂ +0.610×MgF₂ +0.732×LiF+0.452×NaF+0.402×K₂ ZrF₆ +0.217×BaF₂ +0.517x K₂ SiF₆ +0.543×Na₃ AlF₆ ... formula (1)

Here, the chemical formulas of the fluorides in formula (1) show the mass% of the fluorides corresponding to the chemical formulas with respect to the total mass of the flux-cored wire. The coefficients of the chemical formulas of the fluorides were calculated from the amounts of the chemical formulas of the fluorides.

### 1.3. Moisture Absorption Resistance

Regarding (iii), if the flux inside the wire absorbs moisture due to the environment of use at the welding site or at the time of storage, it will become difficult to meet the total amount of moisture of the above (1) at the time of actual welding, and will become difficult to reduce the amount of diffusible hydrogen of the fusion bonding metal. On this point, the flux-cored wire of the present disclosure may have a ratio of increase of wire mass after the elapse of 72 hours in a moisture absorption test in a temperature 30°C-humidity 80% atmosphere of 100 ppm or less, 90 ppm or less, 80 ppm or less, 70 ppm or less, 60 ppm or less, 50 ppm or less, 40 ppm or less, 30 ppm or less, or 20 ppm or less. Note that, this moisture absorption test can be performed by placing a flux-cored wire inside of a constant temperature and constant humidity container held at a temperature 30°C and relative humidity 80% and calculating from the increase in mass after storing the wire for 72 hours. Further, the ratio of increase of the wire mass, theoretically, has a lower limit value of 0 (zero).

The means for the flux-cored wire to be provided with such moisture absorption resistance is not particularly limited. For example, if the steel sheath of the flux-cored wire has a seamless shape, a high moisture absorption resistance is easily secured. Note that, the "seamless shape" in this field of art indicates there being no gap in the steel sheath. Typically, this is a concept including a steel sheath which is obtained by drawing a seamless steel tube and a steel sheath which is seam welded without a gap etc. In seamless wire, the steel sheath has a seamless shape. For example, a continuously supplied outer steel strip (steel sheath) is formed into a U-shape and filled with flux, then the two edge faces of the outer steel strip formed into the U-shape are made to abut against each other and the superposed parts are welded without gap as welding for forming a tube (seam welding). Due to this, it is possible to seal in the flux at the inside of the steel sheath. Further, by the flux being sealed in, high temperature dehydrogenation treatment for removing the moisture which the flux brings inside becomes possible. In addition, copper plating and other wet type surface treatment becomes possible. Further, similarly, it is possible to fill flux inside a seamless steel tube and draw the tube to thereby obtain a flux-cored wire having a seamless shape.

If the flux filled inside of the steel sheath is molten flux, the moisture absorption resistance of the flux-cored wire is easily further improved. Molten flux can, for example, be obtained by causing predetermined fluorides or oxides to melt by arc or high frequency induction heating then causing them to solidify and then pulverizing the solidified product to obtain an amorphous powder or by using the gas atomizing method to obtain an amorphous powder etc.

### 1.4. Amount of Diffusible Hydrogen

The flux-cored wire of the present disclosure, having the properties such as described above, enables the amount of diffusible hydrogen of the weld metal to be reduced. The flux-cored wire of the present disclosure, for example, may have an amount of diffusible hydrogen per mass of fusion bonding metal being 5.0 ml/100 g or less when performing a test using a shield gas containing H₂ in a volume fraction of 1% and having a balance of CO₂ and impurities based on JIS Z 3118: 2007 (Method for Measurement of Amount of Hydrogen Evolved From Steel Welds). Similarly, the flux-cored wire of the present disclosure may have an amount of diffusible hydrogen per mass of fusion bonding metal being 12.0 ml/100 g or less when performing a test using a shield gas containing H₂ in a volume fraction of 3% and having a balance of CO₂ and impurities based on JIS Z 3118: 2007 (Method for Measurement of Amount of Hydrogen Evolved From Steel Welds).

Note that, in the present application, the volume fraction of H₂ contained in the shield gas allows for an error of ±0.2%. For example, in "shield gas containing H₂ in a volume fraction of 1%", the volume fraction of H₂ may also be 1%±0.2%. The volume fractions of other gases able to be contained in the shield gas (for example, CO₂) similarly allow for error of ±0.2%.

In this way, if using the flux-cored wire of the present disclosure for gas shielded arc welding, even if the shield gas contains H₂, the amount of diffusible hydrogen of the fusion bonding metal can be kept from increasing, so for example in welding high strength steel materials having a tensile strength of 780 MPa or more, it becomes possible to perform preheating work at a lower temperature than the past or to decrease the preheating work and, in some cases, eliminate the need for preheating work. In addition, for the purpose of improving the shape of the melt pool at the welded part etc., for example it is possible to use a shield gas containing by volume fraction 0.05% or more and 5% or less of H₂ and having a balance of CO₂ and impurities so as to perform gas shielded arc welding of high strength steel materials. Due to this, the weld shape is improved and the problem of protrusion of the bead etc. can be eliminated.

### 1.5. Other Constituents Forming Flux-Cored Wire

The flux-cored wire of the present disclosure may, for example, contain metal oxides or metal carbonates etc. in addition to predetermined amounts of fluorides in accordance with the strength level of the steel materials being welded or the extent of toughness sought and from the need to consider the formation of slag etc. That is, in the flux-cored wire of the present disclosure, in the same way as known flux-cored wire, it is possible to include alloy constituents for controlling the chemical composition of the weld metal or the carbon equivalent (Ceq) etc. As such metal oxides, oxides of Ti, Si, Zr, Fe, Mn, Al, Na, Mg, and Ca may be mentioned. Complex oxides of these are also possible. Further, as the metal carbonates, CaCO₃, MgCO₃, Na₂ CO₃, K₂ CO₃, FeCO₃, LiCO₃ , etc. may be mentioned. Complex carbonates of these are also possible. Such wire constituents are specifically prescribed considering the types of the steel materials being welded, the welding work efficiency, etc. The metal oxides, metal carbonates, etc. can be filled inside of the steel sheaths together with the fluorides. Among the constituents filled inside of the steel sheaths, the ratio of the fluorides and the constituents other than the fluorides (metal oxides, metal carbonates, etc.) is not particularly limited, but for example when defining the constituents as a whole filled inside the steel sheaths (that is, the constituents as a whole other than the steel sheaths) as 100 mass%, the content of the fluorides may be, by values converted to F, 0.4 mass% or more and 32 mass% or less.

The chemical constituents of the flux-cored wire other than the fluorides, oxides, metal oxides, and metal carbonates preferably include, by mass% with respect to the total mass of the flux-cored wire, C: 0.001 to 0.2%, Si: 0.001 to 2.00%, Mn: 0.4 to 3.5%, P: 0.030% or less, S: 0.020% or less, Cr: 0 to 25%, Ni: 0 to 16%, Mo: 0.1 to 3.5%, Al: 0.700% or less, Cu: 1.00% or less, Nb: 0.50% or less, V: 0.50% or less, Ti: 0.500% or less, B: 0 to 0.020%, Mg: 0 to 0.90%, and Bi: 0 to 0.030% and have a balance of Fe and impurities.

Further, when using titania (TiO₂) as the main slag forming agent, the fluorides are preferably contained, by mass% with respect to the total mass of the flux-cored wire, by total of values converted to F, in 0.11% or more and less than 2.00%, Ti oxides are preferably contained, by mass% converted to TiO₂, in 2.50% or more and less than 8.50%, other oxides are preferably contained, in total, in 0.30% or more and less than 13.00%, carbonates are preferably contained, in total, in 2.00% or less, and iron powder is preferably contained in 0% or more and less than 7.5%.

When using a lime-based agent as the main slag forming agent, the fluorides are preferably contained, by mass% with respect to the total mass of the flux-cored wire, by total of values converted to F, in 0.11% or more, Ti oxides are preferably contained, by mass% converted to TiO₂, in 0% or more and less than 2.50%, other oxides are preferably contained, in total, in 0.30% or more and less than 3.50%, carbonates are preferably contained, in total, in 0% to 3.50%, and iron powder is preferably contained in 0% or more and less than 10.0% in range.

On the other hand, when using a metal-based agent substantially not forming a slag, the fluoride compounds are preferably contained, by mass% with respect to the total mass of the flux-cored wire, by total of values converted to F, in 0 to 0.050%, oxides are preferably contained, in total, in 0.01% to 0.5%, and iron powder is preferably contained in 1.0% to 12.0% in range, and no Ti oxides are added.

Above, the reasons for limitation of the chemical composition of the flux-cored wire of the present disclosure were explained. The balance may be Fe and impurities. As the Fe constituents, the Fe of the steel sheath, the iron powder contained in the flux, and the Fe in the alloy constituents are included. Further, the flux-cored wire may contain impurities entering during the production process etc.

Further, to improve the feedability of the flux-cored wire at the time of welding, the surface of the flux-cored wire may also be coated with a lubricant. As the lubricant for flux-cored wire use, various types can be used. For example, perfluoro polyether oil (PFPE oil), vegetable oil, etc. can be used.

### 1.6. Filling Rate of Flux

The flux-cored wire of the present disclosure may, for example, have the following flux filling rate. That is, in the flux-cored wire of the present disclosure, when defining the mass of the flux-cored wire overall as 100%, the flux may account for 8.0 mass% or more and 25.0 mass% or less. Further, the wire diameter (diameter) of the flux-cored wire of the present disclosure is not particularly limited, but may for example be 0.5 mm or more and may be 5.0 mm or less. Further, the thickness of the steel sheath in the flux-cored wire of the present disclosure is not particularly limited, but for example may be 0.1 mm or more and may be 2.0 mm or less.

### 1.7. Method for Producing Flux-Cored Wire

The flux-cored wire of the present disclosure can, for example, be produced by the following steps. First, if producing wire having the above-mentioned seamless shape, a steel strip for forming the steel sheath and a flux formulated so as to give a predetermined content are prepared. Next, the steel strip is fed in the longitudinal direction while using shaping rolls to form it into an open tube (U-tube). This is made the steel sheath. In the middle of shaping the steel strip, flux is supplied from the open part of the open tube. After shaping the steel strip, the mating edge faces of the open part are butt welded to obtain a steel tube containing flux. This steel tube is drawn. In the middle of this drawing process or after the completion of this drawing process, the steel tube is annealed. At this time, by adjusting the annealing conditions etc. as explained above, it is possible to reduce the total amount of moisture in the wire. Due to the above steps, it is possible to obtain seamless wire having the desired wire diameter comprising a steel sheath inside of which a flux is filled. Further, in addition, it is possible to produce wire having the seamless shape according to the present disclosure even by filling flux inside of a seamless steel tube, drawing the tube, then annealing it. On the other hand, a flux-cored wire not having a seamless shape can be obtained by supplying flux from an open part of an open tube, then making the mating edge faces of the open part abut to form a tube and drawing the tube while not welding the tube to form a seam.

### 2. Applications of Flux-Cored Wire

The flux-cored wire of the present disclosure may, for example, be used for gas shielded arc welding using an H₂ -containing gas as the shield gas. In particular, it is more suitably used in the case of welding steel materials such as high strength steel materials which have tensile strengths of 780 MPa or more and which are susceptible to hydrogen embrittlement, by gas shielded arc welding using an H₂ -containing gas as the shield gas. However, the flux-cored wire of the present disclosure may also be used for welding steel materials other than these. It may also be used for gas shielded arc welding using a shield gas to which H₂ is not added or self shielded arc welding, submerged arc welding, etc. not using a shield gas. In particular, even if welding steel materials with a high low temperature cracking sensitivity, the flux-cored wire of the present disclosure can keep low temperature cracking from occurring without preheating or while remarkably lightening preheating.

### 3. Method for Producing Welded Joint

It is possible to produce a welded joint by welding steel materials by gas shielded arc welding using the flux-cored wire of the present disclosure. The method for producing a welded joint of the present disclosure may for example include gas shielded arc welding of steel materials with a tensile strength of 780 MPa or more using the above flux-cored wire. More specifically, it may include gas shielded arc welding using a shield gas containing, by volume percent, 0.05% or more and 5% or less of H₂ and a balance of CO₂ and impurities. The type of the steel materials to be welded and the type of the shield gas are not particularly limited.

### EXAMPLES

Next, the present invention will be concretely explained based on examples and comparative examples, but the present invention is not limited to the contents of the same.

First, as the method of preparation of the flux, two types, the melting type and nonmelting type, were employed. Among these, in the melting type method of preparation of the flux, predetermined oxides and fluorides were melted by arc, placed in crucibles, and pulverized to thereby form them into powders. These were mixed with a metal constituent to obtain a melting type flux material. In the other nonmelting type method of preparation of flux, powders of predetermined oxides, fluorides, and metals were mixed and a binder comprised of an aqueous solution of sodium silicate or potassium silicate was added and mixed in then the mixture was dried to render it a powder state and thereby obtain a nonmelting type flux material. Further, the respective flux materials were heat treated at 350°C for 1 to 10 hours, then the following two types of wire fabrication methods were used to fill the flux and obtain flux wires.

One is the seamless type wire fabrication method. In this seamless type, a steel strip is fed in the longitudinal direction while using shaping rolls to form it into an open tube. In the middle of this shaping operation, flux is supplied from the open part of the open tube and the mating edge faces of the open part are made to abut against each other and the slit-shaped gap is welded to thereby obtain a tube with no slit-shaped gap. Further, the formed wire is annealed by holding it at 600 to 800°C in temperature range for 1 to 10 hours in the middle of a drawing operation then furnace cooling to obtain a wire diameter ϕ1.2 mm flux-cored wire. By adjusting the annealing conditions, the total amount of moisture contained in the wire was adjusted. Specifically, by heat treating the flux-cored wire at 600°C or more for 30 minutes or more, it was possible to reduce the total amount of moisture to 100 ppm or less. Note that, if the heat treatment temperature was 500°C, even if making the heat treatment time 10 hours, the total amount of moisture was over 100 ppm. The other is the crimping type wire fabrication method. In the crimping type, a steel strip is fed in the longitudinal direction while using shaping rolls to form it into an open tube. In the middle of this shaping operation, flux is supplied from the open part of the open tube which is then crimped together by a drawing operation by a roll rolling machine to obtain a flux-cored wire with a gap and with a final wire diameter of ϕ1.2 mm. The configurations of these flux-cored wires (Wire Nos. 1 to 40) are shown in Table 1-1, Table 1-2, Table 1-3, and Table 1-4.

The contents of the fluorides, the contents of the oxides, and the contents of the carbonates shown in Table 1-1 and Table 1-2 are mass% with respect to the total mass of the flux-cored wire. Here, the contents of the oxides are expressed by converted values of predetermined oxides. Specifically, they are as follows: That is, Ti oxides are expressed as TiO₂, Si oxides as SiO₂ , Zr oxides as ZrO₂, Fe oxides as FeO, Mn oxides as MnO₂, Al oxides as Al₂ O₃, Na oxides as NaO, Mg oxides as MgO, and Ca oxides as CaO. Further, the F converted values are values found by the above-mentioned formula (1). Furthermore, the flux filling rates express the mass ratios of the flux in the flux-cored wire. Still further, the contents of the carbonates show the total contents of the carbonates. On the other hand, in Table 1-3 and Table 1-4, the contents of the elements included as alloy constituents are shown by mass% with respect to the total mass of the flux-cored wire. Note that, the balances of the flux-cored wires disclosed in the tables (that is, the constituents other than the constituents disclosed in Tables 1-1, 1-2, Table 1-3, and Table 1-4) were iron and impurities. Further, the flux-cored wires of the wire Nos. disclosed in the tables were coated with vegetable oil as lubricating oil.

### [Table 1-1]

**(Table 1-1)**

| Wire no. | Flux filling rate (mass%) | Converted values of oxides (mass%) | | | | | | | | | |
|---|---|---|---|---|---|---|---|---|---|---|---|
| | | Ti oxides | Si oxides | Zr oxides | Fe oxides | Mn oxides | Al oxides | Na oxides | K oxides | Mg oxides | Ca oxides |
| 1 | 10.6 | 4.90 | 0.20 | 0.40 | 0.08 | 0.20 | 0.50 | 0.04 | 0.11 | 0.03 | 0.04 |
| 2 | 14.4 | 0.09 | 0.07 | 0.08 | 0.10 | 0.17 | 0.19 | 0.06 | 0.09 | 0.04 | 0.04 |
| 3 | 19.6 | 1.89 | 0.05 | 0.10 | 0.01 | 0.09 | 0.13 | 0.19 | 0.09 | 0.04 | 0.04 |
| 4 | 14.9 | 0.14 | 0.06 | 0.10 | 0.15 | 1.23 | 0.20 | 0.16 | 0.05 | 0.03 | 0.01 |
| 5 | 12.8 | <0.01 | 0.03 | <0.01 | 0.11 | 0.02 | 0.06 | 0.07 | 0.05 | <0.01 | <0.01 |
| 6 | 13.8 | 4.93 | 0.04 | 0.05 | 0.22 | 0.14 | 0.02 | 0.17 | 0.13 | 0.04 | 0.05 |
| 7 | 12.8 | 1.89 | 0.05 | 0.10 | 0.01 | 0.09 | 0.13 | 0.19 | 0.09 | 0.04 | 0.04 |
| 8 | 10.4 | <0.01 | 0.01 | <0.01 | 0.13 | 0.02 | 0.18 | 0.07 | 0.03 | <0.01 | <0.01 |
| 9 | 12.7 | 0.18 | 0.02 | 0.01 | 0.07 | 0.14 | 0.06 | 0.09 | 0.05 | 0.03 | 0.04 |
| 10 | 12.0 | 5.01 | 0.04 | 0.05 | 0.13 | 0.14 | 0.02 | 0.17 | 0.13 | 0.04 | 0.05 |
| 11 | 12.8 | 0.09 | 0.04 | 0.05 | 0.15 | 0.11 | 0.16 | 0.13 | 0.09 | 0.05 | 0.30 |
| 12 | 17.1 | 0.05 | 0.07 | 0.06 | 0.19 | 0.11 | 0.07 | 0.11 | 0.15 | 0.02 | 0.01 |
| 13 | 19.0 | 1.50 | 0.01 | 0.02 | 0.08 | 0.08 | 0.12 | 0.02 | 0.10 | 0.03 | 0.03 |
| 14 | 8.2 | 0.13 | 0.05 | 0.04 | 0.16 | 0.03 | 0.19 | 0.10 | 0.08 | 0.04 | 0.03 |
| 15 | 8.5 | <0.01 | 0.03 | <0.01 | 0.11 | 0.02 | 0.06 | 0.07 | 0.05 | <0.01 | <0.01 |
| 16 | 15.8 | 0.18 | 0.06 | 0.08 | 0.03 | 0.07 | 0.16 | 0.09 | 0.02 | 0.02 | 0.02 |
| 17 | 16.7 | 0.05 | 0.04 | 0.04 | 0.05 | 0.14 | 0.04 | 0.13 | 0.07 | 0.01 | 0.04 |
| 18 | 12.6 | <0.01 | 0.08 | 0.09 | 0.05 | 0.14 | 0.03 | 0.03 | 0.10 | 0.03 | 0.03 |
| 19 | 15.1 | 4.31 | 0.20 | 0.53 | 0.01 | 0.05 | 0.51 | 0.02 | 0.12 | 0.04 | 0.02 |
| 20 | 16.7 | 5.23 | 0.32 | 0.21 | 0.20 | 0.11 | 0.22 | 0.04 | 0.03 | 0.01 | 0.02 |
| 21 | 15.9 | 4.31 | 0.20 | 0.53 | 0.01 | 0.05 | 0.51 | 0.02 | 0.12 | 0.04 | 0.02 |
| 22 | 10.7 | 5.01 | 0.58 | 0.11 | 0.02 | 0.07 | 0.11 | 0.13 | 0.07 | 0.05 | 0.01 |
| 23 | 16.4 | 4.88 | 0.22 | 0.32 | 0.20 | 0.20 | 0.32 | 0.06 | 0.03 | 0.03 | 0.02 |
| 24 | 16.7 | 5.32 | 0.11 | 0.42 | 0.13 | 0.10 | 0.27 | 0.03 | 0.09 | 0.04 | 0.03 |
| 25 | 16.4 | 4.88 | 0.22 | 0.32 | 0.20 | 0.20 | 0.32 | 0.06 | 0.03 | 0.03 | 0.02 |
| 26 | 14.5 | 4.91 | 0.32 | 0.39 | 0.05 | 0.16 | 0.45 | 0.13 | 0.08 | <0.01 | 0.04 |
| 27 | 15.9 | 0.19 | 0.08 | 0.02 | 0.04 | 0.07 | 0.12 | 0.04 | 0.08 | 0.05 | 0.05 |
| 28 | 17.5 | 1.72 | 0.10 | 0.01 | 0.09 | 0.10 | 0.11 | 0.12 | 0.08 | 0.02 | 0.05 |
| 29 | 15.9 | 0.17 | 0.02 | 0.02 | 0.16 | 1.32 | 0.13 | 0.01 | 0.10 | 0.04 | <0.01 |
| 30 | 8.7 | <0.01 | 0.09 | <0.01 | 0.08 | 0.03 | 0.10 | 0.02 | 0.14 | 0.04 | 0.03 |
| 31 | 19.3 | 0.15 | 0.01 | 0.07 | 0.02 | 0.12 | 0.19 | 0.05 | 0.10 | 0.01 | 0.04 |
| 32 | 16.4 | 4.55 | 0.06 | 0.08 | 0.19 | 0.14 | 0.16 | 0.08 | 0.06 | 0.03 | 0.02 |
| 33 | 14.2 | 0.11 | 0.07 | 0.03 | 0.13 | 0.14 | 0.12 | 0.02 | 0.02 | 0.05 | 0.04 |
| 34 | 14.0 | 4.42 | 0.23 | 0.52 | 0.17 | 0.13 | 0.49 | 0.02 | 0.09 | 0.02 | 0.50 |
| 35 | 13.1 | 5.43 | 0.34 | 0.32 | 0.09 | 0.07 | 0.42 | 0.15 | 0.11 | 0.02 | 0.01 |
| 36 | 10.8 | <0.01 | 0.05 | <0.01 | 0.04 | 0.01 | 0.10 | 0.12 | 0.02 | <0.01 | 0.04 |
| 37 | 15.7 | <0.01 | 0.05 | <0.01 | 0.13 | 0.13 | 0.03 | 0.07 | 0.04 | <0.01 | 0.01 |
| 38 | 9.5 | 0.17 | 0.05 | 0.03 | 0.19 | 0.02 | 0.04 | 0.09 | 0.12 | 0.01 | <0.01 |
| 39 | 13.8 | 0.12 | 0.04 | 0.01 | 0.13 | 0.10 | 0.09 | 0.06 | 0.12 | 0.04 | 0.02 |
| 40 | 12.6 | 0.06 | 0.04 | 0.05 | 0.18 | 0.11 | 0.14 | 0.11 | 0.01 | 0.02 | 0.03 |
| 41 | 18.9 | 1.65 | 0.05 | 0.06 | 0.19 | 0.06 | 0.13 | 0.19 | 0.03 | 0.04 | 0.03 |
| 42 | 9.9 | 0.16 | 0.06 | 0.01 | 0.07 | 0.07 | 0.08 | 0.14 | 0.02 | 0.05 | 0.04 |
| 43 | 8.0 | <0.01 | 0.10 | <0.01 | 0.15 | 0.07 | 0.11 | 0.03 | 0.10 | 0.03 | 0.01 |
| 44 | 11.3 | 4.73 | 0.32 | 0.22 | 0.07 | 0.08 | 0.33 | 0.12 | 0.05 | 0.04 | 0.04 |
| 45 | 17.1 | 5.22 | 0.12 | 0.45 | 0.20 | 0.14 | 0.11 | 0.10 | 0.11 | 0.03 | 0.02 |

### [Table 1-2]

**(Table 1-2)**

| Wire no. | Fluorides (mass%) | | | | | | | | F converted value (mass%) | Carbonate (mass%) |
|---|---|---|---|---|---|---|---|---|---|---|
| | CaF₂ | MgF₂ | LiF | NaF | K₂ZrF₆ | BaF₂ | K₂SiF₆ | Na₃AlF₆ | | |
| 1 | 0.86 | <0.01 | <0.01 | <0.01 | <0.01 | <0.01 | <0.01 | <0.01 | 0.42 | <0.01 |
| 2 | 2.14 | <0.01 | <0.01 | <0.01 | <0.01 | <0.01 | <0.01 | <0.01 | 1.04 | <0.01 |
| 3 | <0.01 | 2.42 | <0.01 | <0.01 | <0.01 | <0.01 | <0.01 | <0.01 | 1.48 | <0.01 |
| 4 | <0.01 | <0.01 | 2.88 | <0.01 | <0.01 | <0.01 | <0.01 | <0.01 | 2.11 | <0.01 |
| 5 | <0.01 | <0.01 | <0.01 | <0.01 | <0.01 | <0.01 | <0.01 | 4.19 | 2.27 | <0.01 |
| 6 | <0.01 | <0.01 | <0.01 | <0.01 | 4.41 | <0.01 | <0.01 | <0.01 | 1.77 | <0.01 |
| 7 | <0.01 | 2.42 | <0.01 | <0.01 | <0.01 | <0.01 | <0.01 | <0.01 | 1.48 | <0.01 |
| 8 | <0.01 | <0.01 | <0.01 | 0.94 | <0.01 | <0.01 | <0.01 | <0.01 | 0.42 | <0.01 |
| 9 | <0.01 | <0.01 | <0.01 | 2.25 | <0.01 | <0.01 | <0.01 | <0.01 | 1.02 | <0.01 |
| 10 | <0.01 | <0.01 | <0.01 | <0.01 | 4.41 | <0.01 | <0.01 | <0.01 | 1.77 | <0.01 |
| 11 | <0.01 | <0.01 | <0.01 | <0.01 | 5.59 | <0.01 | <0.01 | <0.01 | 2.25 | 0.2 |
| 12 | <0.01 | <0.01 | <0.01 | <0.01 | <0.01 | 3.26 | <0.01 | <0.01 | 0.71 | <0.01 |
| 13 | <0.01 | <0.01 | <0.01 | <0.01 | <0.01 | <0.01 | 2.20 | <0.01 | 1.14 | 0.8 |
| 14 | <0.01 | <0.01 | <0.01 | <0.01 | <0.01 | <0.01 | 3.25 | <0.01 | 1.68 | <0.01 |
| 15 | <0.01 | <0.01 | <0.01 | <0.01 | <0.01 | <0.01 | <0.01 | 4.19 | 2.27 | <0.01 |
| 16 | 0.49 | <0.01 | <0.01 | 1.16 | <0.01 | <0.01 | <0.01 | <0.01 | 0.76 | <0.01 |
| 17 | <0.01 | 0.30 | <0.01 | <0.01 | 2.21 | <0.01 | <0.01 | <0.01 | 1.07 | <0.01 |
| 18 | <0.01 | <0.01 | <0.01 | 2.30 | <0.01 | <0.01 | 1.33 | <0.01 | 1.73 | <0.01 |
| 19 | 1.85 | <0.01 | <0.01 | <0.01 | <0.01 | <0.01 | <0.01 | 2.10 | 2.05 | <0.01 |
| 20 | <0.01 | 0.50 | <0.01 | <0.01 | <0.01 | 0.61 | <0.01 | <0.01 | 0.43 | <0.01 |
| 21 | 1.85 | <0.01 | <0.01 | <0.01 | <0.01 | <0.01 | <0.01 | 2.10 | 2.05 | <0.01 |
| 22 | <0.01 | <0.01 | <0.01 | 1.20 | 1.71 | <0.01 | <0.01 | <0.01 | 1.23 | <0.01 |
| 23 | <0.01 | <0.01 | <0.01 | <0.01 | 1.30 | <0.01 | 2.30 | <0.01 | 1.57 | <0.01 |
| 24 | <0.01 | <0.01 | <0.01 | <0.01 | <0.01 | <0.01 | 1.20 | 2.30 | 1.87 | <0.01 |
| 25 | <0.01 | <0.01 | <0.01 | <0.01 | 1.30 | <0.01 | 2.30 | <0.01 | 1.57 | <0.01 |
| 26 | 2.52 | <0.01 | <0.01 | <0.01 | <0.01 | <0.01 | <0.01 | <0.01 | 0.02 | <0.01 |
| 27 | 3.23 | <0.01 | <0.01 | <0.01 | <0.01 | <0.01 | <0.01 | <0.01 | 0.04 | 0.2 |
| 28 | <0.01 | 3.60 | <0.01 | <0.01 | <0.01 | <0.01 | <0.01 | <0.01 | 0.07 | <0.01 |
| 29 | <0.01 | <0.01 | 0.30 | <0.01 | <0.01 | <0.01 | <0.01 | <0.01 | 0.09 | <0.01 |
| 30 | <0.01 | <0.01 | <0.01 | 0.10 | <0.01 | <0.01 | <0.01 | <0.01 | 0.72 | <0.01 |
| 31 | <0.01 | <0.01 | <0.01 | 0.15 | <0.01 | <0.01 | <0.01 | <0.01 | 0.04 | <0.01 |
| 32 | <0.01 | <0.01 | <0.01 | <0.01 | 0.21 | <0.01 | <0.01 | <0.01 | 0.07 | <0.01 |
| 33 | <0.01 | <0.01 | <0.01 | <0.01 | 1.79 | <0.01 | <0.01 | <0.01 | 0.09 | <0.01 |
| 34 | <0.01 | <0.01 | <0.01 | <0.01 | <0.01 | 0.19 | <0.01 | <0.01 | 0.23 | <0.01 |
| 35 | <0.01 | <0.01 | <0.01 | <0.01 | <0.01 | <0.01 | 0.13 | <0.01 | 0.04 | <0.01 |
| 36 | <0.01 | <0.01 | <0.01 | <0.01 | <0.01 | <0.01 | 0.17 | <0.01 | 0.07 | <0.01 |
| 37 | <0.01 | <0.01 | <0.01 | <0.01 | <0.01 | <0.01 | <0.01 | 0.42 | 0.09 | <0.01 |
| 38 | <0.01 | <0.01 | 0.40 | 0.42 | <0.01 | <0.01 | <0.01 | <0.01 | 0.48 | <0.01 |
| 39 | <0.01 | <0.01 | 0.21 | <0.01 | 2.50 | <0.01 | <0.01 | <0.01 | 1.16 | 0.8 |
| 40 | <0.01 | 1.50 | <0.01 | <0.01 | <0.01 | <0.01 | 1.33 | <0.01 | 1.60 | <0.01 |
| 41 | 1.83 | <0.01 | <0.01 | <0.01 | <0.01 | <0.01 | <0.01 | 2.20 | 2.08 | <0.01 |
| 42 | <0.01 | 0.50 | <0.01 | <0.01 | <0.01 | 0.65 | <0.01 | <0.01 | 0.45 | <0.01 |
| 43 | <0.01 | <0.01 | <0.01 | 0.80 | 1.50 | <0.01 | <0.01 | <0.01 | 0.96 | <0.01 |
| 44 | <0.01 | <0.01 | <0.01 | <0.01 | 0.48 | <0.01 | 3.10 | <0.01 | 1.80 | <0.01 |
| 45 | <0.01 | <0.01 | <0.01 | <0.01 | <0.01 | <0.01 | 1.50 | 2.35 | 2.06 | <0.01 |

### [Table 1-3]

**(Table 1-3)**

| Wire no. | Chemical constituents (mass%) | | | | | | | | |
|---|---|---|---|---|---|---|---|---|---|
| | C | Si | Mn | P | S | Ni | Cr | Mo | Cu |
| 1 | 0.11 | 0.34 | 2.11 | 0.017 | 0.007 | 0.02 | 0.03 | 0.02 | 0.3 |
| 2 | 0.07 | 0.81 | 1.25 | 0.012 | 0.009 | 0.01 | 0.04 | 0.02 | 0.2 |
| 3 | 0.11 | 0.40 | 2.60 | 0.014 | 0.005 | 0.01 | 0.01 | 0.01 | 0.3 |
| 4 | 0.09 | 0.51 | 1.63 | 0.018 | 0.005 | 0.40 | 0.04 | 0.02 | 0.4 |
| 5 | 0.11 | 0.34 | 2.11 | 0.017 | 0.007 | 0.02 | 0.03 | 0.02 | 0.3 |
| 6 | 0.07 | 0.81 | 1.25 | 0.012 | 0.009 | 0.01 | 0.04 | 0.02 | 0.2 |
| 7 | 0.11 | 0.35 | 2.23 | 0.017 | 0.007 | 0.02 | 0.03 | 0.02 | 0.3 |
| 8 | 0.06 | 0.36 | 1.29 | 0.012 | 0.004 | 1.13 | 0.03 | 0.11 | 0.3 |
| 9 | 0.06 | 0.76 | 1.85 | 0.016 | 0.009 | 0.57 | 0.53 | 0.03 | 0.2 |
| 10 | 0.03 | 0.72 | 1.86 | 0.013 | 0.005 | 2.70 | 0.09 | 0.22 | 0.2 |
| 11 | 0.05 | 0.81 | 2.17 | 0.013 | 0.004 | 0.02 | 0.87 | 0.05 | 0.6 |
| 12 | 1.33 | 0.61 | 0.80 | 0.011 | 0.007 | 1.09 | 0.84 | 0.42 | 0.3 |
| 13 | 1.31 | 0.34 | 1.76 | 0.014 | 0.005 | 2.85 | 0.30 | 0.51 | 0.4 |
| 14 | 0.10 | 0.06 | 1.82 | 0.012 | 0.009 | 0.05 | 0.05 | 0.03 | 0.4 |
| 15 | 0.04 | 0.77 | 0.78 | 0.014 | 0.005 | 0.03 | 0.05 | 0.04 | 0.4 |
| 16 | 0.02 | 0.74 | 1.99 | 0.012 | 0.007 | 0.02 | 0.04 | 0.04 | 0.2 |
| 17 | 0.09 | 0.70 | 2.95 | 0.011 | 0.007 | 0.04 | 2.41 | 1.07 | 0.3 |
| 18 | 0.05 | 0.75 | 1.11 | 0.014 | 0.008 | 0.03 | 8.22 | 1.03 | 0.4 |
| 19 | 0.05 | 0.81 | 1.21 | 0.012 | 0.009 | 13.17 | 23.77 | 0.03 | 0.3 |
| 20 | 0.04 | 0.62 | 1.79 | 0.011 | 0.009 | 12.15 | 27.07 | 2.14 | 0.2 |
| 21 | 0.07 | 0.95 | 1.21 | 0.012 | 0.009 | 0.01 | 0.04 | 0.02 | 0.2 |
| 22 | 0.03 | 0.80 | 0.32 | 0.011 | 0.005 | 0.03 | 19.03 | 0.04 | 0.4 |
| 23 | 0.28 | 0.49 | 3.44 | 0.012 | 0.005 | 0.04 | 2.53 | 0.47 | 0.2 |
| 24 | 0.03 | 0.61 | 3.02 | 0.010 | 0.007 | 0.01 | 16.64 | 0.03 | 0.3 |
| 25 | 0.11 | 0.34 | 2.11 | 0.017 | 0.007 | 0.02 | 0.03 | 0.02 | 0.3 |
| 26 | 0.11 | 0.47 | 2.22 | 0.016 | 0.005 | 0.04 | 0.03 | 0.02 | 0.3 |
| 27 | 0.05 | 0.56 | 0.67 | 0.016 | 0.008 | 0.02 | 0.03 | 0.05 | 0.4 |
| 28 | 0.08 | 0.50 | 2.47 | 0.011 | 0.005 | 0.05 | 0.05 | 0.02 | 0.3 |
| 29 | 0.07 | 0.77 | 1.87 | 0.013 | 0.006 | 0.21 | 0.03 | 0.05 | 0.2 |
| 30 | 0.08 | 0.45 | 1.66 | 0.011 | 0.005 | 1.15 | 0.04 | 0.14 | 0.4 |
| 31 | 0.29 | 0.36 | 1.05 | 0.015 | 0.004 | 0.59 | 0.52 | 0.03 | 0.3 |
| 32 | 0.05 | 0.28 | 1.70 | 0.016 | 0.005 | 2.40 | 0.11 | 0.18 | 0.2 |
| 33 | 0.08 | 0.87 | 0.79 | 0.016 | 0.005 | 0.02 | 0.91 | 0.02 | 0.5 |
| 34 | 1.21 | 0.56 | 2.95 | 0.015 | 0.006 | 1.04 | 0.92 | 0.48 | 0.3 |
| 35 | 1.29 | 0.73 | 1.52 | 0.011 | 0.005 | 2.70 | 0.29 | 0.51 | 0.3 |
| 36 | 0.10 | 0.06 | 1.85 | 0.011 | 0.008 | 0.05 | 0.02 | 0.04 | 0.3 |
| 37 | 0.08 | 0.72 | 1.10 | 0.012 | 0.009 | 0.03 | 0.02 | 0.03 | 0.4 |
| 38 | 0.05 | 0.59 | 2.53 | 0.012 | 0.004 | 0.02 | 0.04 | 0.03 | 0.2 |
| 39 | 0.05 | 0.74 | 0.82 | 0.013 | 0.007 | 0.01 | 2.08 | 0.92 | 0.3 |
| 40 | 0.08 | 0.43 | 1.61 | 0.018 | 0.009 | 0.02 | 9.11 | 0.99 | 0.4 |
| 41 | 0.05 | 0.79 | 1.43 | 0.012 | 0.009 | 11.73 | 24.13 | 0.04 | 0.2 |
| 42 | 0.09 | 0.42 | 1.19 | 0.015 | 0.009 | 13.37 | 25.74 | 2.43 | 0.4 |
| 43 | 0.03 | 0.63 | 0.34 | 0.010 | 0.005 | 0.03 | 16.93 | 0.04 | 0.3 |
| 44 | 0.24 | 0.32 | 3.04 | 0.012 | 0.006 | 0.04 | 2.50 | 0.54 | 0.3 |
| 45 | 0.04 | 0.75 | 1.75 | 0.013 | 0.006 | 0.05 | 18.20 | 0.01 | 0.3 |

### [Table 1-4]

**(Table 1-4)**

| Wire no. | Chemical constituents (mass%) | | | | | | | | | |
|---|---|---|---|---|---|---|---|---|---|---|
| | Ti | Al | B | Mg | Nb | V | Zr | Bi | W | Fe powder |
| 1 | 0.07 | 0.02 | 0.003 | 0.022 | 0.02 | 0.02 | 0.02 | 0.01 | 0.002 | 3.2 |
| 2 | 0.05 | 0.01 | 0.006 | 0.025 | 0.02 | 0.01 | 0.02 | 0.03 | 0.004 | 9.9 |
| 3 | 0.05 | 0.02 | 0.004 | 0.037 | 0.01 | 0.03 | 0.01 | 0.02 | 0.003 | <0.01 |
| 4 | 0.08 | 0.02 | 0.030 | 0.010 | 0.02 | 0.03 | 0.02 | 0.02 | 0.001 | 4.3 |
| 5 | 0.07 | 0.02 | 0.003 | 0.022 | 0.02 | 0.02 | 0.02 | 0.01 | 0.002 | 3.2 |
| 6 | 0.05 | 0.01 | 0.006 | 0.025 | 0.02 | 0.01 | 0.02 | 0.03 | 0.004 | 9.9 |
| 7 | 0.07 | 0.02 | 0.003 | 0.022 | 0.02 | 0.02 | 0.02 | 0.01 | 0.002 | 3.2 |
| 8 | 0.07 | 0.03 | 0.006 | 0.025 | 0.01 | 0.02 | 0.03 | 0.04 | 0.003 | 33.2 |
| 9 | 0.06 | 0.03 | 0.004 | 0.053 | 0.01 | 0.03 | 0.01 | 0.01 | 0.002 | 9.3 |
| 10 | 0.07 | 0.03 | 0.007 | 0.021 | 0.02 | 0.01 | 0.02 | 0.04 | 0.001 | 4.7 |
| 11 | 0.07 | 0.03 | 0.002 | 0.021 | 0.01 | 0.02 | 0.02 | 0.03 | 0.003 | 7.0 |
| 12 | 0.17 | 0.03 | 0.003 | 0.038 | 0.02 | 0.03 | 0.04 | 0.02 | 0.002 | 6.8 |
| 13 | 0.06 | 0.03 | 0.007 | 0.041 | 0.01 | 0.03 | 0.01 | 0.02 | 0.002 | 3.1 |
| 14 | 0.06 | 0.04 | 0.008 | 0.022 | 0.01 | 0.03 | 0.02 | 0.04 | 0.003 | 7.8 |
| 15 | 0.05 | 0.03 | 0.007 | 0.037 | 0.02 | 0.54 | 0.02 | 0.03 | 0.001 | 6.9 |
| 16 | 0.04 | 0.04 | 0.007 | 0.045 | 0.01 | 0.01 | 0.44 | 0.03 | 0.001 | 23.2 |
| 17 | 0.06 | 0.04 | 0.006 | 0.013 | 0.02 | 0.29 | 0.02 | 0.03 | 0.003 | 22.4 |
| 18 | 0.04 | 0.03 | 0.001 | 0.028 | 0.01 | 0.53 | 0.03 | 0.04 | 0.003 | 18.2 |
| 19 | 0.07 | 0.04 | 0.005 | 0.019 | 0.02 | 0.02 | 0.02 | 0.04 | 0.082 | 24.2 |
| 20 | 0.07 | 0.02 | 0.004 | 0.045 | 0.02 | 0.02 | 0.02 | 0.03 | 0.003 | 7.4 |
| 21 | 0.05 | 0.01 | 0.006 | 0.025 | 0.02 | 0.01 | 0.02 | 0.03 | 0.004 | 9.9 |
| 22 | 0.06 | 0.02 | 0.005 | 0.021 | 0.53 | 0.03 | 0.01 | 0.05 | 0.001 | 3.1 |
| 23 | 0.08 | 0.03 | 0.006 | 0.031 | 0.01 | 0.03 | 0.03 | 0.04 | 0.002 | 3.2 |
| 24 | 0.05 | 0.02 | 0.007 | 0.016 | 0.01 | 0.01 | 0.02 | 0.01 | 0.004 | 9.9 |
| 25 | 0.07 | 0.02 | 0.003 | 0.022 | 0.02 | 0.02 | 0.02 | 0.01 | 0.002 | 3.2 |
| 26 | 0.05 | 0.04 | 0.003 | 0.030 | 0.01 | 0.03 | 0.03 | 0.05 | 0.002 | 6.4 |
| 27 | 0.05 | 0.02 | 0.004 | 0.034 | 0.01 | 0.02 | 0.03 | 0.03 | 0.001 | 4.0 |
| 28 | 0.07 | 0.04 | 0.004 | 0.051 | 0.02 | 0.01 | 0.03 | 0.01 | 0.003 | 9.5 |
| 29 | 0.07 | 0.04 | 0.027 | 0.038 | 0.01 | 0.01 | 0.02 | 0.03 | 0.002 | 1.4 |
| 30 | 0.04 | 0.03 | 0.007 | 0.056 | 0.02 | 0.03 | 0.03 | 0.05 | 0.003 | 33.2 |
| 31 | 0.04 | 0.03 | 0.006 | 0.048 | 0.01 | 0.01 | 0.03 | 0.02 | 0.004 | 5.6 |
| 32 | 0.05 | 0.03 | 0.006 | 0.038 | 0.02 | 0.03 | 0.03 | 0.01 | 0.002 | 6.0 |
| 33 | 0.05 | 0.02 | 0.003 | 0.038 | 0.02 | 0.02 | 0.02 | 0.03 | 0.003 | 3.1 |
| 34 | 0.17 | 0.03 | 0.002 | 0.048 | 0.01 | 0.02 | 0.02 | 0.03 | 0.002 | 2.0 |
| 35 | 0.07 | 0.01 | 0.004 | 0.046 | 0.02 | 0.02 | 0.02 | 0.02 | 0.054 | 7.8 |
| 36 | 0.06 | 0.02 | 0.003 | 0.034 | 0.01 | 0.01 | 0.01 | 0.03 | 0.004 | 7.1 |
| 37 | 0.04 | 0.02 | 0.003 | 0.024 | 0.01 | 0.56 | 0.03 | 0.03 | 0.002 | 8.0 |
| 38 | 0.05 | 0.03 | 0.002 | 0.019 | 0.01 | 0.03 | 0.49 | 0.02 | 0.003 | 23.2 |
| 39 | 0.06 | 0.02 | 0.004 | 0.038 | 0.02 | 0.31 | 0.02 | 0.02 | 0.003 | 22.4 |
| 40 | 0.05 | 0.03 | 0.007 | 0.016 | 0.02 | 0.50 | 0.02 | 0.04 | 0.001 | 18.2 |
| 41 | 0.06 | 0.02 | 0.003 | 0.039 | 0.02 | 0.03 | 0.03 | 0.02 | 0.003 | 24.2 |
| 42 | 0.07 | 0.02 | 0.005 | 0.017 | 0.02 | 0.02 | 0.03 | 0.05 | 0.001 | 8.4 |
| 43 | 0.04 | 0.04 | 0.007 | 0.040 | 0.43 | 0.01 | 0.02 | 0.05 | 0.003 | 4.7 |
| 44 | 0.09 | 0.01 | 0.005 | 0.052 | 0.01 | 0.02 | 0.02 | 0.02 | 0.001 | <0.01 |
| 45 | 0.05 | 0.02 | 0.007 | 0.033 | 0.01 | 0.02 | 0.01 | 0.04 | 0.003 | 7.3 |

The above obtained flux-cored wires were evaluated for properties as follows: First, the total amount of moisture by ratio with respect to the total wire mass was measured by the Karl Fischer method (KF method) based on JIS K0068: 2001. As the measurement samples, the flux-cored wires were cut into 1 to 2 mm lengths to obtain cut pieces totaling 1 to 5 g. The measurement samples were loaded into a furnace heated to 900°C and the evaporated moisture was measured by the potentiometric titration method. Further, the ratio of increase of mass of the flux-cored wires was calculated by preparing 1 kg of the obtained flux-cored wire and storing it for 72 hours in a constant temperature, constant humidity container held at a temperature 30°C and relative humidity 80%, and finding the increase in mass after that.

On the other hand, the amount of diffusible hydrogen per mass of fusion bonding metal when welding using these flux-cored wires was measured by gas chromatography based on JIS Z 3118: 2007 (Method for Measurement of Amount of Hydrogen Evolved From Steel Welds). This was evaluated by three cases of the shield gas at the time of welding: the case of carbonic acid gas (CO₂) 100 vol%, the case of a mixed gas of H₂ and CO₂ adjusted to include 1 vol% of hydrogen gas (H₂), and the case of a mixed gas of H₂ and CO₂ adjusted to include 3 vol% of H₂. Further, the welding was performed in the conditions described in Table 2. Note that, as the base material for measurement of the amount of diffusible hydrogen, steel sheet comprised of, by mass%, C: 0.14%, Si: 0.20%, Mn: 0.76%, P: 0.020%, S: 0.008%, and a balance: Fe and impurities was used. The properties of the flux-cored wires based on these evaluations are summarized in Table 3-1 and Table 3-2. Here, in Table 3-1 and Table 3-2, the methods of preparation of the flux in the flux-cored wires and the methods of fabrication of the wires are shown together. Further, regarding the results of measurement of the amount of diffusible hydrogen, in Table 3-2, the underlined numerical values show cases where the amount of diffusible hydrogen per mass of fusion bonding metal when using a shield gas of carbonic acid gas (CO₂) 100 vol% shield gas was over 4.0 ml/100 g, cases where the amount of diffusible hydrogen per mass of fusion bonding metal when using a shield gas comprised of a mixed gas of 1 vol% of hydrogen gas (H₂) and CO₂ was over 5.0 ml/100 g, and cases where the amount of diffusible hydrogen per mass of fusion bonding metal when using a shield gas comprised of a mixed gas of 3 vol% of hydrogen gas (H₂) and CO₂ was over 12.0 ml/100 g.

### [Table 2]

**(Table 2)**

| Welding method | Weld current (A) | Arc voltage (V) | Welding speed (mm/min) | Tip-base material distance (mm) | Shield gas flow rate (L/min) |
|---|---|---|---|---|---|
| Gas shielded arc welding | 255 to 285 | 25 to 35 | 330 to 370 | 24 to 26 | 20 to 25 |

### [Table 3-1]

**(Table 3-1)**

| Wire no. | Flux preparation method | Wire fabrication method | Total amount of moisture (ppm) | Rate of increase of wire mass (ppm) | F converted value (mass%) |
|---|---|---|---|---|---|
| 1 | Nonmelting type | Seamless | 87 | 17 | 0.42 |
| 2 | Nonmelting type | Seamless | 83 | 22 | 1.04 |
| 3 | Nonmelting type | Seamless | 101 | 19 | 1.48 |
| 4 | Nonmelting type | Seamless | 70 | 21 | 2.11 |
| 5 | Nonmelting type | Seamless | 96 | 11 | 2.27 |
| 6 | Nonmelting type | Seamless | 91 | 14 | 1.77 |
| 7 | Nonmelting type | Seamless | 54 | 25 | 1.48 |
| 8 | Nonmelting type | Seamless | 116 | 15 | 0.42 |
| 9 | Nonmelting type | Seamless | 145 | 16 | 1.02 |
| 10 | Nonmelting type | Seamless | 121 | 17 | 1.77 |
| 11 | Nonmelting type | Seamless | 120 | 19 | 2.25 |
| 12 | Nonmelting type | Seamless | 165 | 20 | 0.71 |
| 13 | Nonmelting type | Seamless | 168 | 19 | 1.14 |
| 14 | Nonmelting type | Seamless | 170 | 21 | 1.68 |
| 15 | Nonmelting type | Seamless | 185 | 15 | 2.27 |
| 16 | Nonmelting type | Seamless | 204 | 16 | 0.76 |
| 17 | Nonmelting type | Seamless | 206 | 16 | 1.07 |
| 18 | Nonmelting type | Seamless | 224 | 17 | 1.73 |
| 19 | Melting type | Seamless | 228 | 13 | 2.05 |
| 20 | Melting type | Seamless | 237 | 18 | 0.43 |
| 21 | Melting type | Seamless | 91 | 13 | 2.05 |
| 22 | Melting type | Crimping | 246 | 72 | 1.23 |
| 23 | Melting type | Crimping | 262 | 87 | 1.57 |
| 24 | Melting type | Crimping | 234 | 82 | 1.87 |
| 25 | Melting type | Crimping | 95 | 92 | 1.57 |
| 26 | Nonmelting type | Seamless | 100 | 15 | 0.02 |
| 27 | Nonmelting type | Seamless | 76 | 14 | 0.04 |
| 28 | Nonmelting type | Seamless | 122 | 21 | 0.07 |
| 29 | Nonmelting type | Seamless | 115 | 11 | 0.09 |
| 30 | Nonmelting type | Seamless | 310 | 13 | 0.72 |
| 31 | Nonmelting type | Seamless | 165 | 13 | 0.04 |
| 32 | Nonmelting type | Seamless | 217 | 15 | 0.07 |
| 33 | Nonmelting type | Seamless | 223 | 12 | 0.09 |
| 34 | Melting type | Seamless | 342 | 11 | 0.23 |
| 35 | Melting type | Seamless | 418 | 12 | 0.04 |
| 36 | Nonmelting type | Crimping | 298 | 120 | 0.07 |
| 37 | Nonmelting type | Crimping | 293 | 153 | 0.09 |
| 38 | Nonmelting type | Crimping | 340 | 161 | 0.48 |
| 39 | Nonmelting type | Seamless | 319 | 11 | 1.16 |
| 40 | Nonmelting type | Seamless | 380 | 12 | 1.60 |
| 41 | Nonmelting type | Seamless | 366 | 14 | 2.08 |
| 42 | Nonmelting type | Seamless | 388 | 10 | 0.45 |
| 43 | Melting type | Crimping | 381 | 67 | 0.96 |
| 44 | Melting type | Crimping | 414 | 74 | 1.80 |
| 45 | Melting type | Crimping | 322 | 73 | 2.06 |

### [Table 3-2]

**(Table 3-2)**

| Wire no. | Diffusible hydrogen (ml/100g) | | | Evaluation of stability of weld bead | | | Remarks |
|---|---|---|---|---|---|---|---|
| | CO₂ 100 vol% | 1 vol% H₂ + CO₂ | 3 vol% H₂ + CO₂ | CO₂ 100 vol% | 1 vol% H₂ + CO₂ | 3 vol% H₂ + CO₂ | |
| 1 | 0.9 | 3.7 | 9.4 | B | B | A | Ex. |
| 2 | 0.5 | 2.3 | 6.0 | B | B | A | Ex. |
| 3 | 0.5 | 1.9 | 4.9 | B | B | A | Ex. |
| 4 | 0.3 | 1.4 | 3.7 | B | B | A | Ex. |
| 5 | 0.4 | 1.1 | 2.5 | B | B | A | Ex. |
| 6 | 0.3 | 0.9 | 3.5 | B | B | A | Ex. |
| 7 | 0.2 | 1.3 | 2.9 | B | B | A | Ex. |
| 8 | 1.1 | 3.9 | 9.5 | B | B | A | Ex. |
| 9 | 0.8 | 2.7 | 6.4 | B | B | A | Ex. |
| 10 | 0.5 | 1.8 | 4.4 | B | B | A | Ex. |
| 11 | 0.4 | 1.5 | 3.7 | B | B | A | Ex. |
| 12 | 1.1 | 3.4 | 7.9 | B | B | A | Ex. |
| 13 | 0.8 | 2.6 | 6.1 | B | B | A | Ex. |
| 14 | 0.7 | 2.0 | 4.7 | B | B | A | Ex. |
| 15 | 0.6 | 1.7 | 3.8 | B | B | A | Ex. |
| 16 | 1.3 | 3.5 | 7.8 | B | B | A | Ex. |
| 17 | 1.0 | 2.9 | 6.5 | B | B | A | Ex. |
| 18 | 0.8 | 2.2 | 4.8 | B | B | A | Ex. |
| 19 | 0.7 | 1.9 | 4.3 | B | B | A | Ex. |
| 20 | 1.9 | 4.7 | 10.3 | B | B | A | Ex. |
| 21 | 0.3 | 1.8 | 4.2 | B | B | A | Ex. |
| 22 | 1.1 | 2.8 | 6.1 | B | B | A | Ex. |
| 23 | 1.0 | 2.4 | 5.3 | B | B | A | Ex. |
| 24 | 0.8 | 2.1 | 4.6 | B | B | A | Ex. |
| 25 | 0.6 | 2.1 | 4.1 | B | B | A | Ex. |
| 26 | 4.7 | 9.0 | 17.5 | D | C | B | Comp. ex. |
| 27 | 4.1 | 8.3 | 16.6 | D | C | B | Comp. ex. |
| 28 | 5.0 | 9.0 | 17.0 | D | C | B | Comp. ex. |
| 29 | 4.8 | 8.7 | 16.6 | D | C | B | Comp. ex. |
| 30 | 6.3 | 8.5 | 13.0 | D | C | B | Comp. ex. |
| 31 | 6.0 | 10.2 | 18.5 | D | C | B | Comp. ex. |
| 32 | 7.0 | 11.0 | 19.1 | D | C | B | Comp. ex. |
| 33 | 7.0 | 11.0 | 18.9 | D | C | B | Comp. ex. |
| 34 | 11.8 | 15.2 | 21.9 | D | C | B | Comp. ex. |
| 35 | 11.6 | 15.8 | 24.2 | D | C | B | Comp. ex. |
| 36 | 8.7 | 12.7 | 20.8 | D | C | B | Comp. ex. |
| 37 | 8.5 | 12.4 | 20.3 | D | C | B | Comp. ex. |
| 38 | 7.3 | 9.9 | 15.3 | B | B | A | Comp. ex. |
| 39 | 5.4 | 7.1 | 10.6 | B | B | A | Comp. ex. |
| 40 | 5.5 | 6.9 | 9.8 | B | B | A | Comp. ex. |
| 41 | 5.0 | 6.1 | 8.5 | B | B | A | Comp. ex. |
| 42 | 8.2 | 11.0 | 16.5 | B | B | A | Comp. ex. |
| 43 | 6.5 | 8.5 | 12.3 | B | B | A | Comp. ex. |
| 44 | 5.7 | 7.0 | 9.6 | B | B | A | Comp. ex. |
| 45 | 5.4 | 6.6 | 9.0 | B | B | A | Comp. ex. |

Further, each flux-cored wire was used for bead welding on a top surface of a flat steel material. Here, the welding conditions were shown in Table 4. Further, as the steel material, SM400A prescribed in JIS G 3106: 2015 was used. The dimensions of the steel material were a thickness 12 mm, width 40 mm, and length 300 mm. The weld bead of 200 mm was formed. Wires by which a normal bead, when visually examining the outer appearance, could not be formed were evaluated as "D", wires by which a normal bead could be formed, but the value of the depth of melt penetration divided by the bead width became less than 0.3 were evaluated as "C", wires by which a normal bead could be formed and the value of the depth of melt penetration divided by the bead width became 0.3 or more and less than 0.6 were evaluated as "B", and wires by which a normal bead could be formed and the value of the depth of melt penetration divided by the bead width became 0.6 or more and less than 0.9 were evaluated as "A". The results are as shown in Table 3-2.

### [Table 4]

**(Table 4)**

| Current (A) | Voltage (V) | Welding speed (mm/min) | Heat input (kJ/cm) | Projected temperature (°C) | Gas flow rate (liters/min) |
|---|---|---|---|---|---|
| 255 to 285 | 25 to 35 | 330 to 370 | 10 to 18 | None (room temperature) | 20 to 25 |

As for the flux-cored wires of Wire Nos. 1 to 20, no matter which shield gas was used, the bead shape was excellent. In particular, in the case of a mixed gas of 3 vol% of H₂ and CO₂ , the value of the depth of melt penetration divided by the bead width became larger and heat became concentrated resulting in a more ideal melt penetration shape at the weld zone while the amount of diffusible hydrogen could be kept down. On the other hand, as for the flux-cored wires of Wire Nos. 21 to 32, the shape of the bead did not become stabilized. In the case of CO₂ gas 100 vol% shield gas, a normal bead could not be formed. Furthermore, in the flux-cored wires of Wire Nos. 33 to 40, even if a normal bead could be formed, the amount of diffusible hydrogen at the weld metal could not be kept down. Note that, FIG. 1 shows by a graph the relationship between the total amount of moisture by ratio with respect to the total wire mass of these flux-cored wires and the total of values converted to F with respect to the total wire mass.

Further, among the above flux-cored wires, several wires were used to similarly bead weld a steel material having a tensile strength of 780 MPa or more (HW685 prescribed in WES 3001), whereupon substantially the same results were obtained as with the above case of use of SM400A. That is, from the perspective of a person skilled in the art, it is clear that similar results are obtained regarding evaluation of weld beads both when using SM400A as the steel material and when using HW685.

Further, the obtained flux-cored wire was analyzed for constituents of the weld metal in accordance with the method of preparation of fusion bonding metal for chemical analysis and method of obtaining samples prescribed in JIS Z 3184: 2003. The results are as shown in Table 5-1 and Table 5-2.

### [Table 5-1]

**(Table 5-1)**

| Wire no. | C | Si | Mn | P | S | Ni | Cr | Mo | Cu |
|---|---|---|---|---|---|---|---|---|---|
| 1 | 0.07 | 0.34 | 1.05 | 0.017 | 0.007 | 0.03 | 0.04 | 0.04 | 0.4 |
| 2 | 0.10 | 0.54 | 0.88 | 0.016 | 0.008 | 0.03 | 0.02 | 0.03 | 0.2 |
| 3 | 0.06 | 0.30 | 0.95 | 0.013 | 0.007 | 0.02 | 0.04 | 0.04 | 0.3 |
| 4 | 0.06 | 0.39 | 1.61 | 0.016 | 0.006 | 0.44 | 0.04 | 0.03 | 0.2 |
| 5 | 0.07 | 0.23 | 1.05 | 0.017 | 0.007 | 0.03 | 0.04 | 0.04 | 0.4 |
| 6 | 0.07 | 0.44 | 1.36 | 0.011 | 0.009 | 0.04 | 0.10 | 0.02 | 0.4 |
| 7 | 0.07 | 0.34 | 1.08 | 0.017 | 0.007 | 0.03 | 0.04 | 0.04 | 0.4 |
| 8 | 0.04 | 0.23 | 0.94 | 0.015 | 0.008 | 1.22 | 0.01 | 0.11 | 0.3 |
| 9 | 0.05 | 0.23 | 0.54 | 0.011 | 0.008 | 0.54 | 0.51 | 0.04 | 0.3 |
| 10 | 0.03 | 0.37 | 1.17 | 0.015 | 0.008 | 2.52 | 0.10 | 0.20 | 0.3 |
| 11 | 0.02 | 0.27 | 1.06 | 0.014 | 0.005 | 0.04 | 0.90 | 0.04 | 0.6 |
| 12 | 1.19 | 0.44 | 1.36 | 0.011 | 0.009 | 1.02 | 0.87 | 0.46 | 0.4 |
| 13 | 1.20 | 0.22 | 1.76 | 0.015 | 0.006 | 3.02 | 0.31 | 0.55 | 0.3 |
| 14 | 0.07 | 0.05 | 0.55 | 0.018 | 0.008 | 0.05 | 0.02 | 0.02 | 0.3 |
| 15 | 0.06 | 0.27 | 0.69 | 0.015 | 0.004 | 0.04 | 0.02 | 0.04 | 0.3 |
| 16 | 0.06 | 0.45 | 1.21 | 0.014 | 0.010 | 0.04 | 0.02 | 0.01 | 0.3 |
| 17 | 0.10 | 0.49 | 1.22 | 0.013 | 0.006 | 0.04 | 2.25 | 1.02 | 0.4 |
| 18 | 0.09 | 0.30 | 1.44 | 0.016 | 0.007 | 0.04 | 9.02 | 1.10 | 0.3 |
| 19 | 0.05 | 0.52 | 1.21 | 0.012 | 0.007 | 12.20 | 22.60 | 0.02 | 0.4 |
| 20 | 0.03 | 0.26 | 0.63 | 0.017 | 0.006 | 12.00 | 25.20 | 2.37 | 0.2 |
| 21 | 0.06 | 0.39 | 1.61 | 0.016 | 0.006 | 0.44 | 0.04 | 0.03 | 0.2 |
| 22 | 0.03 | 0.47 | 0.23 | 0.018 | 0.008 | 0.02 | 18.10 | 0.05 | 0.3 |
| 23 | 0.25 | 0.44 | 2.32 | 0.014 | 0.009 | 0.05 | 2.53 | 0.49 | 0.4 |
| 24 | 0.03 | 0.25 | 1.43 | 0.015 | 0.006 | 0.02 | 17.20 | 0.03 | 0.2 |
| 25 | 0.03 | 0.47 | 0.23 | 0.018 | 0.008 | 0.02 | 18.10 | 0.05 | 0.3 |
| 26 | 0.06 | 0.41 | 1.11 | 0.014 | 0.009 | 0.02 | 0.03 | 0.04 | 0.2 |
| 27 | 0.07 | 0.27 | 1.57 | 0.018 | 0.010 | 0.05 | 0.03 | 0.03 | 0.3 |
| 28 | 0.04 | 0.60 | 0.87 | 0.014 | 0.007 | 0.03 | 0.04 | 0.04 | 0.2 |
| 29 | 0.05 | 0.39 | 0.68 | 0.013 | 0.008 | 0.23 | 0.02 | 0.05 | 0.4 |
| 30 | 0.06 | 0.50 | 1.74 | 0.011 | 0.008 | 1.12 | 0.04 | 0.15 | 0.2 |
| 31 | 0.26 | 0.21 | 1.82 | 0.017 | 0.010 | 0.55 | 0.53 | 0.03 | 0.3 |
| 32 | 0.09 | 0.40 | 0.53 | 0.010 | 0.010 | 2.61 | 0.11 | 0.19 | 0.2 |
| 33 | 0.10 | 0.52 | 1.29 | 0.011 | 0.006 | 0.03 | 0.92 | 0.01 | 0.5 |
| 34 | 1.19 | 0.34 | 1.66 | 0.012 | 0.007 | 1.03 | 0.84 | 0.45 | 0.3 |
| 35 | 1.20 | 0.32 | 0.77 | 0.015 | 0.004 | 2.98 | 0.29 | 0.56 | 0.4 |
| 36 | 0.06 | 0.05 | 1.14 | 0.010 | 0.007 | 0.05 | 0.05 | 0.04 | 0.3 |
| 37 | 0.07 | 0.49 | 1.08 | 0.014 | 0.005 | 0.05 | 0.05 | 0.02 | 0.3 |
| 38 | 0.08 | 0.52 | 0.56 | 0.011 | 0.009 | 0.02 | 0.02 | 0.02 | 0.4 |
| 39 | 0.05 | 0.53 | 0.72 | 0.013 | 0.005 | 0.03 | 2.25 | 1.01 | 0.4 |
| 40 | 0.03 | 0.34 | 1.08 | 0.017 | 0.005 | 0.04 | 9.02 | 1.02 | 0.4 |
| 41 | 0.05 | 0.49 | 1.42 | 0.016 | 0.010 | 12.00 | 22.80 | 0.01 | 0.4 |
| 42 | 0.03 | 0.60 | 1.32 | 0.015 | 0.009 | 12.20 | 25.10 | 2.40 | 0.3 |
| 43 | 0.03 | 0.54 | 0.23 | 0.017 | 0.009 | 0.03 | 18.10 | 0.03 | 0.3 |
| 44 | 0.23 | 0.21 | 2.32 | 0.018 | 0.007 | 0.02 | 2.55 | 0.51 | 0.2 |
| 45 | 0.04 | 0.23 | 1.60 | 0.010 | 0.005 | 0.05 | 16.90 | 0.02 | 0.2 |

### [Table 5-2]

**(Table 5-2)**

| Wire no. | Ti | Al | B | Mg | Nb | V | Zr | Bi | W |
|---|---|---|---|---|---|---|---|---|---|
| 1 | 0.05 | 0.01 | 0.003 | 0.001 | 0.01 | 0.02 | 0.002 | 0.004 | 0.002 |
| 2 | 0.05 | 0.02 | 0.005 | 0.004 | 0.01 | 0.02 | 0.001 | 0.004 | 0.003 |
| 3 | 0.06 | 0.02 | 0.003 | 0.003 | 0.02 | 0.03 | 0.003 | 0.003 | 0.004 |
| 4 | 0.05 | 0.02 | 0.020 | 0.001 | 0.02 | 0.02 | 0.002 | 0.004 | 0.003 |
| 5 | 0.05 | 0.01 | 0.003 | 0.001 | 0.01 | 0.02 | 0.002 | 0.004 | 0.002 |
| 6 | 0.15 | 0.03 | 0.001 | 0.005 | 0.01 | 0.03 | 0.004 | 0.003 | 0.004 |
| 7 | 0.05 | 0.01 | 0.003 | 0.001 | 0.01 | 0.02 | 0.002 | 0.004 | 0.002 |
| 8 | 0.06 | 0.03 | 0.004 | 0.003 | 0.01 | 0.02 | 0.003 | 0.004 | 0.004 |
| 9 | 0.08 | 0.02 | 0.002 | 0.002 | 0.02 | 0.02 | 0.002 | 0.002 | 0.004 |
| 10 | 0.06 | 0.03 | 0.001 | 0.005 | 0.02 | 0.02 | 0.004 | 0.005 | 0.002 |
| 11 | 0.07 | 0.02 | 0.004 | 0.003 | 0.01 | 0.01 | 0.002 | 0.004 | 0.004 |
| 12 | 0.15 | 0.03 | 0.001 | 0.005 | 0.01 | 0.03 | 0.004 | 0.003 | 0.004 |
| 13 | 0.05 | 0.03 | 0.004 | 0.002 | 0.02 | 0.02 | 0.003 | 0.005 | 0.004 |
| 14 | 0.08 | 0.01 | 0.003 | 0.003 | 0.02 | 0.01 | 0.003 | 0.003 | 0.004 |
| 15 | 0.07 | 0.02 | 0.002 | 0.002 | 0.02 | 0.50 | 0.002 | 0.001 | 0.003 |
| 16 | 0.05 | 0.02 | 0.003 | 0.004 | 0.02 | 0.03 | 0.050 | 0.001 | 0.002 |
| 17 | 0.05 | 0.01 | 0.005 | 0.004 | 0.01 | 0.30 | 0.002 | 0.003 | 0.002 |
| 18 | 0.07 | 0.02 | 0.003 | 0.003 | 0.02 | 0.50 | 0.002 | 0.004 | 0.003 |
| 19 | 0.05 | 0.02 | 0.002 | 0.004 | 0.01 | 0.03 | 0.001 | 0.003 | 0.080 |
| 20 | 0.08 | 0.02 | 0.003 | 0.003 | 0.02 | 0.02 | 0.003 | 0.004 | 0.004 |
| 21 | 0.05 | 0.02 | 0.020 | 0.001 | 0.02 | 0.02 | 0.002 | 0.004 | 0.003 |
| 22 | 0.06 | 0.03 | 0.005 | 0.002 | 0.48 | 0.01 | 0.004 | 0.005 | 0.002 |
| 23 | 0.07 | 0.03 | 0.004 | 0.002 | 0.02 | 0.02 | 0.003 | 0.004 | 0.002 |
| 24 | 0.04 | 0.02 | 0.002 | 0.004 | 0.02 | 0.02 | 0.001 | 0.003 | 0.002 |
| 25 | 0.06 | 0.03 | 0.005 | 0.002 | 0.48 | 0.01 | 0.004 | 0.005 | 0.002 |
| 26 | 0.05 | 0.01 | 0.004 | 0.002 | 0.02 | 0.02 | 0.002 | 0.002 | 0.001 |
| 27 | 0.03 | 0.03 | 0.004 | 0.001 | 0.02 | 0.01 | 0.002 | 0.004 | 0.004 |
| 28 | 0.07 | 0.03 | 0.002 | 0.005 | 0.01 | 0.03 | 0.003 | 0.003 | 0.003 |
| 29 | 0.03 | 0.02 | 0.020 | 0.005 | 0.01 | 0.02 | 0.004 | 0.004 | 0.003 |
| 30 | 0.05 | 0.02 | 0.003 | 0.004 | 0.02 | 0.02 | 0.002 | 0.002 | 0.002 |
| 31 | 0.07 | 0.03 | 0.003 | 0.005 | 0.02 | 0.03 | 0.003 | 0.001 | 0.002 |
| 32 | 0.06 | 0.02 | 0.002 | 0.004 | 0.02 | 0.01 | 0.002 | 0.002 | 0.002 |
| 33 | 0.05 | 0.01 | 0.004 | 0.003 | 0.02 | 0.02 | 0.001 | 0.002 | 0.002 |
| 34 | 0.16 | 0.03 | 0.001 | 0.004 | 0.01 | 0.01 | 0.001 | 0.003 | 0.002 |
| 35 | 0.03 | 0.03 | 0.004 | 0.004 | 0.01 | 0.03 | 0.003 | 0.001 | 0.050 |
| 36 | 0.04 | 0.01 | 0.003 | 0.002 | 0.02 | 0.02 | 0.001 | 0.004 | 0.003 |
| 37 | 0.06 | 0.03 | 0.002 | 0.002 | 0.01 | 0.52 | 0.002 | 0.002 | 0.004 |
| 38 | 0.04 | 0.02 | 0.004 | 0.003 | 0.02 | 0.02 | 0.050 | 0.002 | 0.002 |
| 39 | 0.05 | 0.02 | 0.003 | 0.003 | 0.01 | 0.32 | 0.002 | 0.003 | 0.002 |
| 40 | 0.06 | 0.01 | 0.005 | 0.003 | 0.01 | 0.56 | 0.003 | 0.004 | 0.003 |
| 41 | 0.05 | 0.02 | 0.001 | 0.004 | 0.01 | 0.01 | 0.003 | 0.003 | 0.001 |
| 42 | 0.08 | 0.03 | 0.003 | 0.001 | 0.01 | 0.02 | 0.003 | 0.002 | 0.003 |
| 43 | 0.03 | 0.03 | 0.002 | 0.005 | 0.43 | 0.02 | 0.002 | 0.005 | 0.001 |
| 44 | 0.03 | 0.01 | 0.002 | 0.003 | 0.01 | 0.02 | 0.003 | 0.003 | 0.002 |
| 45 | 0.07 | 0.03 | 0.005 | 0.003 | 0.01 | 0.02 | 0.003 | 0.003 | 0.003 |

## Claims

1. A flux-cored wire having a steel sheath and a flux filled at an inside of said steel sheath, in which flux-cored wire,
a total amount of moisture by ratio with respect to a total wire mass is 300 ppm or less, said flux contains fluorides,
an amount of said fluorides by ratio with respect to the total wire mass is, by total of values converted to F, 0.11 mass% or more and 2.50 mass% or less.

2. The flux-cored wire according to claim 1, wherein a ratio of increase of wire mass after an elapse of 72 hours in a moisture absorption test in a temperature 30°C-humidity 80% atmosphere is 100 ppm or less.

3. The flux-cored wire according to claim 1 or 2, wherein the total amount of moisture by ratio with respect to the total wire mass is 100 ppm or less.

4. The flux-cored wire according to any one of claims 1 to 3, wherein an amount of diffusible hydrogen per mass of fusion bonding metal is 5.0 ml/100 g or less when performing a test based on JIS Z 3118: 2007 using a shield gas containing H₂ in a volume fraction of 1% and having a balance of CO₂ and impurities.

5. The flux-cored wire according to any one of claims 1 to 4, wherein an amount of diffusible hydrogen per mass of fusion bonding metal is 12.0 ml/100 g or less when performing a test based on JIS Z 3118: 2007 using a shield gas containing H₂ in a volume fraction of 3% and having a balance of CO₂ and impurities.

6. The flux-cored wire according to any one of claims 1 to 5, wherein said steel sheath has a seamless shape.

7. The flux-cored wire according to any one of claims 1 to 6, used for gas shielded arc welding using H₂ containing gas as a shield gas.

8. A method for producing a welded joint, the method comprising
using the flux-cored wire according to any one of claims 1 to 7 for gas shielded arc welding of steel materials with a tensile strength of 780 MPa or more.

9. The method for producing a welded joint according to claim 8, the method comprising
using a shield gas containing, by volume fraction, 0.05% or more and 5% or less of H₂ and having a balance of CO₂ and impurities for performing said gas shielded arc welding.
